# EUROPEAN PATENT APPLICATION

(11) **EP 3 179 383 A1**
(43) Date of publication of application: **14.06.2017**
(21) Application number: 15837832.3
(22) Date of filing: 25.08.2015
(51) Int. Cl.: G06F 17/30

(54) **DEVICE AND METHOD FOR ERROR CORRECTION IN DATA SEARCH**

(30) Priority: 03.09.2014 CN 201410447009
(71) Applicant: LE Holdings (Beijing) Co., Ltd., Beijing 100025 (CN); Le Shi Internet Information & Technology Corp. Beijing, Beijing 100025 (CN)
(72) Inventor: GUAN, Tao, Beijing 100025 (CN); YU, Lizhu, Beijing 100025 (CN)
(74) Representative: Würmser, Julian
(86) International application number: PCT/CN2015/087971
(87) International publication number: WO 2016/034052

(57) **Abstract**

*Disclosed is a device and method for error-correction in data searches. The device for* error-correction includes a keyword-counting module, which is configured to count all search keywords to obtain first features of the search keywords; a keyword-inserting module, which is configured to insert the search keywords into a pre-constructed categorical data structure according to the first features of the search keywords, where each node of the categorical data structure stores N search keywords, and the N is a natural number greater than or equal to 1; a key-value-corresponding module, which is configured to respectively perform pairwise comparison on search keywords stored in each node, determine a wrong search keyword and a corresponding search keyword for error-correction in two compared search keywords according to a comparison result, and form the wrong search keyword and the corresponding search keyword for error-correction into a key value pair; and an error-correction operation module, which is configured to perform an error-correction operation on the received search keyword according to the key value pair. A manner of performing error-correction on search keywords by the present disclosure is small in calculating amount and high in calculating efficiency.

## Description

### TECHNICAL FIELD

The present disclosure relates to the field of data-searching technology, and particularly relates to a device and method for error-correction in data searches.

### BACKGROUND

An amount of data of network information increases with the development of Internet technology such as a great deal of video information on a video website, a great deal of user-published information in an online forum, as well as a mass of historical logs of a user. To achieve a certain operation mark , there is a need in obtaining data meet needs from a large amount of data of network information.

Existing data-searching technologies are mostly based on one or more keywords, and a searching engine server performs searching in a pre-established data index according to an input search keyword, and then presents index data to a user. However, the search keyword easily goes wrong due to indiscretion and lack of standard of the input, and no corresponding search result can be queried out or a wrong search result would be queried out due to the wrong search keyword.

To distinguish wrong search keywords in search keywords, the related art generally performs pairwise comparison on all search keywords, and calculates pairwise similarities of all the search keywords, so as to find out which keywords are wrong search keywords and corresponding correct search keywords. In this way, error-correction of search keywords is realized, and accuracy of searching is guaranteed; however, a manner of performing error-correction on search keywords by performing pairwise comparison on all the search keywords is huge in calculating amount and low in calculating efficiency.

Accordingly, it becomes a technical problem has to be solved in data searches technologies on how to increase efficiency of performing error-correction on search keywords.

### SUMMARY

In view of this, the present disclosure provides a device and method for error-correction in data searches, where a manner of performing error-correction on search keywords by the device and method is small in calculating amount and high in calculating efficiency.

The present disclosure provides a device for error-correction in data search including:
a keyword-counting module, which is configured to count all search keywords to obtain first features of the search keywords;
a keyword-inserting module, which is configured to insert the search keywords into a pre-constructed categorical data structure according to the first features of the search keywords, where each node of the categorical data structure stores N search keywords, and the N is a natural number greater than or equal to 1;
a key-value-corresponding module, which is configured to respectively perform pairwise comparison on search keywords stored in each node, determine a wrong search keyword and a corresponding search keyword for error-correction in two compared search keywords according to a comparison result, and form the wrong search keyword and the corresponding search keyword for error-correction into a key value pair; and
an error-correction operation module, which is configured to perform an error-correction operation on the received search keyword according to the key value pair.

The present disclosure further provides a method for error-correction in data searches, including:
counting all search keywords to obtain first features of the search keywords;
inserting the search keywords into a pre-constructed categorical data structure according to the first features of the search keywords, where each node of the categorical data structure stores N search keywords, and the N is a natural number greater than or equal to 1;
performing pairwise comparison on search keywords stored in each node respectively, determining a wrong search keyword and a corresponding search keyword for error-correction in two compared search keywords according to a comparison result, and forming the wrong search keyword and the corresponding search keyword for error-correction into a key value pair; and
performing an error-correction operation on the received search keyword according to the key value pair.

### BRIEF DESCRIPTION OF DRAWINGS

FIG. 1 is a structural diagram illustrating a device for error-correction in data searches according to the present disclosure;
FIG. 2 is a schematic diagram illustrating a trie tree according to the present disclosure;
FIG. 3 is a schematic diagram illustrating insertion of Chinese Bopomofo into a trie tree;
FIG. 4 is a structural diagram illustrating a key-value-corresponding module according to the present disclosure;
FIG. 5 is a flow diagram illustrating a method for error-correction in data searches according to the present disclosure; and
FIG. 6 is a flow diagram illustrating step S4 according to the present disclosure.

### DETAILED DESCRIPTION

To avoid search errors caused by randomness and lack of standard of input of search keywords, a conventional data search technology usually utilizes words, such as synonyms or more standard words, which have a certain correlation to perform error-correction on the search keywords. However, before the error-correction is performed on the search keywords, it is often required that an error-correction file is established firstly, where the error-correction file includes wrong search keywords and corresponding search keywords for error-correction, which form key value pairs. Establishment of the key value pairs requires pairwise comparison on all search keywords and calculation on pairwise similarities of all search keywords, so that such a huge calculating amount results in low calculating efficiency of error-correction file establishing.

The present disclosure counts all search keywords, and inserts the search keywords into a constructed categorical data structure according to first features of the search keywords, so as to realize that search keywords stored by each node in the categorical data structure are respectively compared pairwise, and determine a wrong search keyword and a corresponding search keyword for error-correction according to a comparison result, and forms the wrong search keyword and the corresponding search keyword for error-correction into a key value pair. In the present disclosure, error-correction is performed on received search keywords according to the key value pair. Accordingly, the present disclosure only need to perform pairwise comparison on search keywords stored by each node in the categorical data structure, without performing pairwise comparison on all search keywords, thereby greatly reducing calculating amount for performing error-correction on the search keywords, and increasing calculating efficiency.

Detailed descriptions of the present disclosure will be further described below in conjunction with accompanying drawings of the present disclosure.

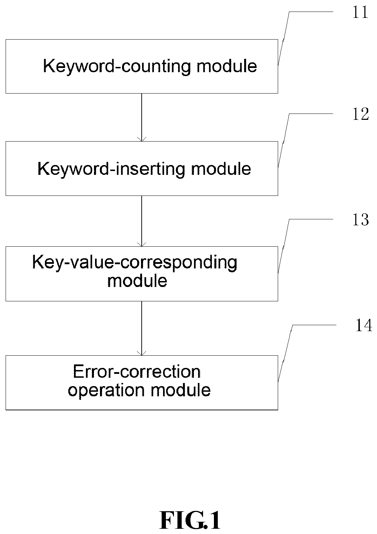

With reference to FIG. 1, the present disclosure provides a device for error-correction in data searches, which is applied to devices such as computer, mobile phone, tablet computer and the like. A hardware device generally includes a CPU, an input-output module, a memory and other hardware modules. The present disclosure may be used for searching a large amount of data of information, such as a great deal of user-published information in a website forum, video files in a server as well as a mass of historical logs of a user and the like.

The device of the present disclosure includes:
a keyword-counting module 11, which is configured to count all search keywords to obtain first features of the search keywords;
a keyword-inserting module 12, which is configured to insert the search keywords into a pre-constructed categorical data structure according to the first features of the search keywords, where each node of the categorical data structure stores N search keywords, and the N is a natural number greater than or equal to 1;
a key-value-corresponding module 13, which is configured to respectively perform pairwise comparison on search keywords stored in each node, determine a wrong search keyword and a corresponding search keyword for error-correction in two compared search keywords according to a comparison result, and form the wrong search keyword and the corresponding search keyword for error-correction into a key value pair; and
an error-correction operation module 14, which is configured to perform an error-correction operation on the received search keyword according to the key value pair.

The present disclosure only need to perform pairwise comparison on search keywords stored by each node in the categorical data structure, without performing pairwise comparison on all search keywords, thereby greatly reducing calculating amount for performing error-correction on the search keywords, and increasing calculating efficiency.

Since keywords are generally input by a Pinyin-input method or a five-stroke input method, randomness and lack of standard of input of search keywords are usually caused by the input method. To acquire whether the search keyword is a wrong search keyword or a search keyword for error-correction so as to perform error-correction better on search keywords, the keyword-counting module 11 counts search keywords to obtain Pinyin or Chinese character strokes of the search keywords as first features of the search keywords.

In a particular implementation of the present disclosure, a categorical data pre-established by the present disclosure is a trie tree.

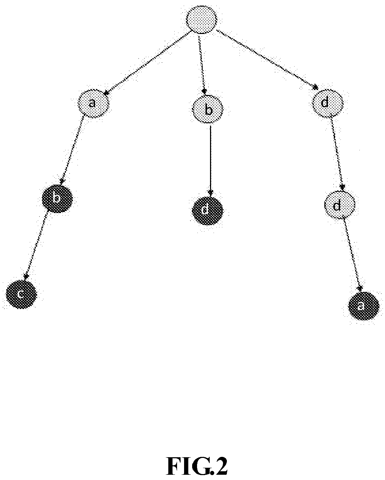

With reference to FIG. 2, the trie tree, which is also known as a word-searching tree, is of a tree structure, and is a variant of a Hash tree. The trie tree is typically used for counting, sequencing and storing a great deal of character strings (but not limited to character strings), so that the trie tree is often used for counting a text word frequency by a search engine system. The trie tree has advantages that: search time is reduced by using a common prefix of the character strings, unnecessary character string comparisons are minimized maximally, and search efficiency of the trie tree is higher than that of a hashmap. A root node in FIG. 2 does not store characters, various child nodes of the trie tree respectively store one character of the character strings in sequence, and character strings stored in the trie tree are ab, abc, bd and dda, and termination of a character string is represented by black color at an end of the character string.

In one embodiment of the present disclosure, a search keyword table is established for each node of the trie tree, where size of the search keyword table is N (for instance, N=100), and the search keyword table can store N search keywords. The keyword-inserting module 12 of the present disclosure inserts the search keywords into the trie tree according to Pinyin or Chinese character strokes of the search keywords.

One embodiment of the present disclosure will be described merely by taking an example that search keywords are inserted into a search keyword table corresponding to a certain node in the trie tree according to Pinyin.

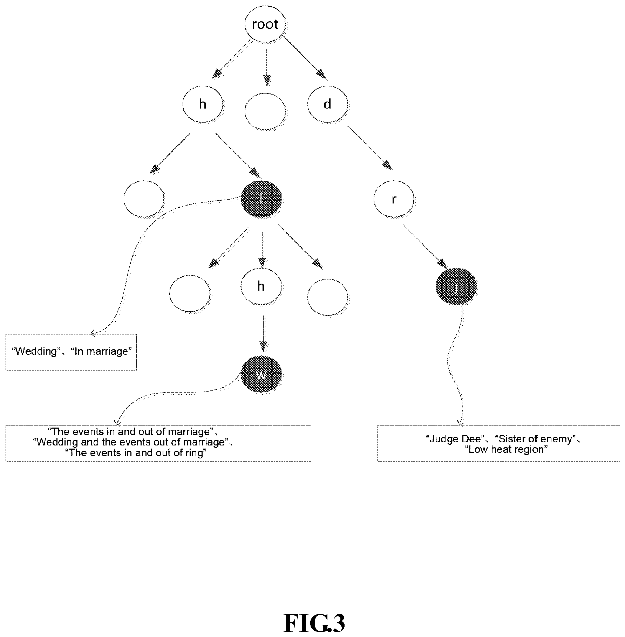

In one particular implementation of the present disclosure, a first Pinyin identifier of each character of any one search keyword is arranged according to a sequence of characters firstly. Certainly, if the search keyword is relatively long, a first Pinyin identifier of each character in partial search keywords of a preset length (for instance, the first four) may be arranged according to the sequence of the characters. Secondly, the first Pinyin identifiers are disposed on corresponding nodes with gradually advanced levels in a same subtree according to the arrangement sequence. For instance, a first Pinyin identifier of a first character is disposed on a child node of a root node, a first Pinyin identifier of a second character is disposed on a child node of the node where the first Pinyin identifier of the first character is disposed and so on. Accordingly, after the above setting is completed, first Pinyin identifiers of characters sequentially arranged in the search keywords (or partial search keywords of a preset length) may be obtained by traversing from a root node of a same subtree to subsequent nodes according to level. Thirdly, the search keywords are inserted into a traversed last node. For example, with reference to FIG. 3, search keywords counted by the present disclosure are as follows: "the events in and out of marriage" ( 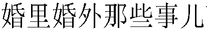 ), "wedding and the events out of marriage" ( 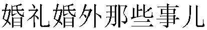 ), "the events in and out of ring" ( 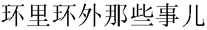 ), "wedding" ( 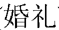 ), "in marriage" ( 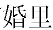 ), "Judge Dee" ( 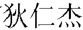 ), "sister of enemy" ( 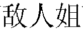 ) and "low heat region" ( 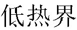 ). Pinyin of the above search keywords are respectively obtained as follows: "hunlihunwainaxieshier", "hunlihunwainaxieshier", "huanlihuanwainaxieshier", "hunli", "hunli", "direnjie", "direnjie", "direjie". In particular, in the present disclosure, inserting the search keyword "the events in and out of marriage" ( 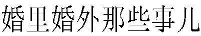 ) into the trie tree according to Pinyin includes: (1) a first Pinyin identifier of each character of first four characters in the search keyword "the events in and out of marriage" ( 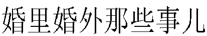 ) is arranged according to a sequence as below: "h", "1", "h", "w". (2) first Pinyin identifiers "h", "1", "h" and "w" of each character are sequentially disposed on corresponding nodes of a same subtree. That is, the Pinyin identifier "h" is disposed on a child node of a root node, the Pinyin identifier "1" is disposed on a child node of the node where the Pinyin identifier "h" is located, the Pinyin identifier "h" is disposed on a child node of the node where the Pinyin identifier "1" is located, and the Pinyin identifier "w" is disposed on a child node of the node where the Pinyin identifier "h" is located. (3) the search keyword "the events in and out of marriage" ( 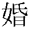 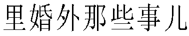 ) is inserted into the node where the Pinyin identifier "w" is located. According to this step, the search keywords "wedding and the events out of marriage" ( 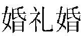 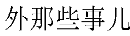 ), "the events in and out of ring" ( 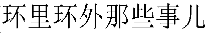 ), "wedding" ( 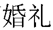 ), "in marriage" ( 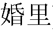 ), "Judge Dee" ( 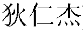 ), "sister of enemy" ( 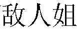 ) and "low heat region" ( 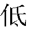 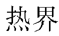 ) are inserted into search keyword tables corresponding to the respective nodes in the trie tree. It may be known from above discussion that the search keywords "the events in and out of marriage" ( 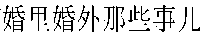 ), "wedding and the events out of marriage" ( 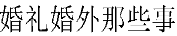 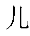 ) and "the events in and out of ring" ( 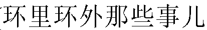 ) will be inserted into a same node, the search keywords "wedding" ( 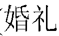 ) and "in marriage" ( 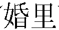 ) are inserted into a same node, and the search keywords "Judge Dee" ( 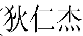 ), "sister of enemy" ( 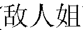 ) and "low heat region" ( 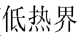 ) are inserted into a same node. The search keywords "the events in and out of marriage" ( 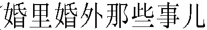 ), "wedding and the events out of marriage" ( 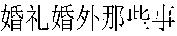 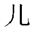 ) and "the events in and out of ring" ( 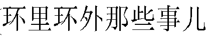 ) are compared pairwise (three times); the search keywords "wedding" ( 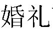 ) and "in marriage" ( 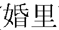 ) are compared pairwise (one time), and the search keywords "Judge Dee" ( 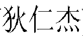 ), "sister of enemy" ( 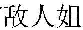 ) and "low heat region" ( 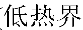 ) are compared pairwise (three times). There is no need as in the related art to compare all the search keywords including "the events in and out of marriage" ( 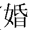 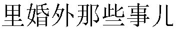 ), "wedding and the events out of marriage" ( 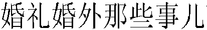 ), "the events in and out of ring" ( 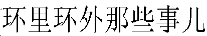 ), "wedding" ( 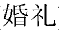 ), "in marriage" ( 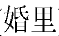 ), "Judge Dee" ( 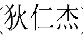 ), "sister of enemy" ( 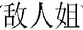 ) and "low heat region" ( 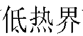 ) pairwise (56 times), so that calculating amount of performing error-correction on search keywords is greatly reduced, and calculating efficiency is greatly increased.

In the above embodiment, the trie tree including a plurality of subtrees is established, different child nodes (a next node) in each subtree share a same father node (a next node), child nodes of a same father node are different from each other, and termination of a character string is represented by black color at an end of the character string, and various letters in character strings composed of first letters of Pinyin of search keywords in the search keyword table corresponding to each child node are sequentially stored in various nodes of corresponding branches of the trie tree.

Since inserting search keywords into the trie tree according to strokes is similar to inserting search keywords into the trie tree according to Pinyin, for example, a first stroke of each Chinese character of a search keyword can serve as a first feature of the search keyword, and a trie tree is established according to a set stroke sequence, which will not be repeated here.

Certainly, in the present disclosure, other categorical data structures except for the trie tree may also be employed so as to achieve the present disclosure, for instance, a binary searching tree, a ternary searching tree, a chain table and the like, which is not limited in the present disclosure. Those skilled in the art may also insert, according to the above operation of inserting the search keywords into the trie tree according to Pinyin, the search keywords into other categorical data structures such as binary search tree, ternary search tree, chain table and the like according to Pinyin or Chinese character strokes of the search keywords.

Further, the keyword-counting module 11 of the present disclosure is further configured to obtain a search history of the search keywords. In particular, the search history includes frequency of searching times and/or history of a search keyword serving as a wrong search keyword and a search keyword serving as a search keyword for error-correction in an original key value pair (a key value pair stored by an original error-correction file).

The keyword-inserting module 12 is further configured to insert the search keywords into the categorical data structure according to first features and the search history of the search keywords.

In a preferred embodiment of the present disclosure, the search keywords are sequenced according to its frequency of searching times, and then inserted into the trie tree in accordance with first features according to sequence of the search keywords. The more the number that the search keyword is queried, the higher the probability that the search keyword becomes the search keyword for error-correction. Moreover, size of the search keyword table established by each node of the trie tree is fixed as N, and the search keywords are inserted into the trie tree according to first features after being sequenced according to its frequency of searching times, so that it can be guaranteed that a search keyword with high frequency of searching times is firstly inserted, and a search keyword with low frequency of searching times is inserted later or cannot be inserted. Therefore, the trie tree established in this embodiment is higher in search efficiency, so that calculating amount for error-correction is reduced, and error-correction effect is improved.

Similarly, with reference to history of a search keyword serving as the wrong search keyword and a search keyword serving as the search keyword for error-correction in the original key value pair, the search keyword serving as the search keyword for error-correction in the original key value pair is firstly inserted into the trie tree, so that it is guaranteed that search efficiency of the established trie tree is higher, calculating amount for error-correction is reduced, and error-correction effect is improved.

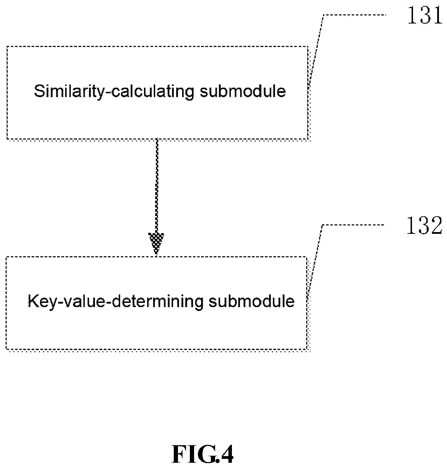

With reference to FIG. 4, in one exemplary embodiment of the present disclosure, the key-value-corresponding module 13 includes:
a similarity-calculating submodule 131, which is configured to pairwise calculate similarities of search keywords stored by each node, and set two keywords with a similarity which is less than a first preset threshold as a first keyword pair; and
a key-value-determining submodule 132, which is configured to determine a wrong search keyword and a corresponding search keyword for error-correction in the first keyword pair according to a search history of the search keywords, and form the wrong search keyword and the corresponding search keyword for error-correction into a key value pair.

When a similarity of a first keyword pair obtained by the similarity-calculating submodule 131 of the present disclosure is less than the first preset threshold, it is indicated that one search keyword in the two search keywords in the first keyword pair possibly is a wrong search keyword caused by randomness and lack of standard of input. Therefore, the key-value-determining submodule 132 determines, in conjunction with the search history, that which search keyword in the two search keywords in the first keyword pair is the wrong search keyword, and which search keyword is the search keyword for error-correction. The first preset threshold is set by those skilled in the art according to needs and experiences.

In particular, the similarity (closeness) of the search keywords stored by each node may be calculated pairwise by using an edit distance. The edit distance is also known as a Levenshtein distance, and refers to a minimum number of edit operation times required by converting from one character string to the other character string between two character strings. Permitted edit operations include: replacement of one character with the other character, insertion of one character, and deletion of one character. Assuming that similarity S of a search keyword q1 and a search keyword q2 is calculated as below:

S=D/L, where the D is an edit distance between the search keyword q1 and the search keyword q2, the L is a longest distance (a maximal number of characters of a search keyword) between the search keyword q1 and the search keyword q2.

For example, an edit distance between a search keyword "wedding and the events out of marriage" () and a search keyword "the events in and out of marriage" ( 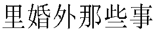 ) is 1, that is, there is one time of conversion for converting "wedding" () into "in" (). A longest distance between the search keyword "wedding and the events out of marriage" ( 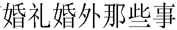 ) and the search keyword "the events in and out of marriage" ( 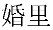 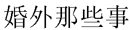 ) is 7, then a similarity between the search keyword "wedding and the events out of marriage" ( 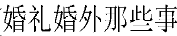 ) and the search keyword "the events in and out of marriage" ( 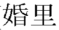 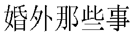 ) is equal to 1/7.

The edit distance between the search keyword q1 and the search keyword q2 here is a number of conversion times between characters of two search keywords; certainly, number of conversion times between Pinyin of two search keywords may also be considered, for example, an edit distance between "direnjie" and "direjie" is 1. Preferably, a sum of a product obtained by multiplying an edit distance between characters of two search keywords q1 and q2 by one weighted value with a product obtained by multiplying an edit distance between Pinyin of two search keywords q1 and q2 by another weighted value serves as an edit distance between two search keywords q1 and q2. The weighted values are set by those skilled in the art according to system needs.

In addition, it should be noted that, in a particular implementation of the present disclosure, a correct search keyword database which is configured to store pre-stored correct search keywords is generally further included. If one search keyword in the first keyword pair hits a correct search keyword in the correct search keyword database, the search keyword is determined as a search keyword for error-correction, and the other search keyword is determined as a wrong search keyword. If no search keyword in the first keyword pair hits the correct search keyword in the correct search keyword database, the key-value-determining submodule 132 is continuously employed to determine, in conjunction with the search history, that which search keyword in the two search keywords in the first keyword pair is the wrong search keyword and which search keyword is the search keyword for error-correction.

Further, the key-value-determining submodule 132 determines the wrong search keyword and the corresponding search keyword for error-correction in the first keyword pair according to the frequency of searching times and/or history of a search keyword serving as the wrong search keyword and a search keyword serving as the search keyword for error-correction in the original key value pair. For example, the key-value-determining module 132 compares frequency of searching times of a search keyword with low frequency of searching times with frequency of searching times of a search keyword with high frequency of searching times according to frequency of searching times of two search keywords in the first keyword pair, to obtain a retrieval ratio of the two numbers of searching times. When the retrieval ratio is less than a third preset threshold, the search keyword with low frequency of searching times is the wrong search keyword, and the search keyword with high frequency of searching times is the search keyword for error-correction. The third preset threshold is set by those skilled in the art according to needs and experiences. For another example, with reference to history of two search keywords, in which one of the search keywords serves as the wrong search keyword and the other one of the search keywords serves as the search keyword for error-correction in the original key value pair, in the first keyword pair, if one search keyword serves as the wrong search keyword in the original key value pair, the key-value-determining submodule 132 determines that this search keyword serves as the wrong search keyword, and determines that the other search keyword serves as the search keyword for error-correction.

In the present disclosure, the wrong search keyword and the corresponding search keyword for error-correction in the first keyword pair may be determined according to the frequency of searching times or history of a search keyword serving as the wrong search keyword and a search keyword serving as the search keyword for error-correction in the original key value pair separately; and in the present disclosure, the wrong search keyword and the corresponding search keyword for error-correction in the first keyword pair may be comprehensively determined according to the frequency of searching times in combination with history of a search keyword serving as the wrong search keyword and a search keyword serving as the search keyword for error-correction in the original key value pair. For instance, one search keyword in the first keyword pair is firstly set as the wrong search keyword and the other search keyword is set as the search keyword for error-correction according to history of a search keyword serving as the wrong search keyword and a search keyword serving as the search keyword for error-correction in the original key value pair. Then, the third preset threshold is set as a vary small value, the original setting is changed only when frequency of searching times of a search keyword with less frequency of searching times or frequency of searching times of a search keyword with high frequency of searching times is less than the third preset threshold. The search keyword which is originally set as the wrong search keyword is modified as a search keyword for error-correction, and the search keyword which is originally set as the search keyword for error-correction is modified as a wrong search keyword. In this way, misjudgment caused when individually considering frequency of searching times or the original key value pair is avoided, and accuracy of determining the wrong search keyword and the corresponding search keyword for error-correction in the first keyword pair is improved.

Furthermore, the key-value-determining submodule 132 of the present disclosure still requires calculating an error degree (difference degree) between the wrong search keyword and the corresponding search keyword for error-correction after determining the wrong search keyword and the corresponding search keyword for error-correction in the first keyword pair according to search history of the search keywords; and makes the wrong search keyword and the corresponding search keyword for error-correction form a key value pair if the error degree is greater than a second preset threshold. The second preset threshold is set by those skilled in the art according to needs and experiences.

The error degree between the wrong search keyword and the corresponding search keyword for error-correction particularly refers to an error probability between the wrong search keyword and the corresponding search keyword for error-correction. Firstly, the error degree between the wrong search keyword and the corresponding search keyword for error-correction is directly proportional to the similarity between the wrong search keyword and the corresponding search keyword for error-correction, that is, the higher the similarity, the higher the error degree.

For example, the wrong search keyword is "wedding and the events out of marriage" ( 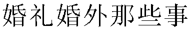 ), the search keyword for error-correction is "the events in and out of marriage" ( 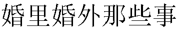 ), and the two search keywords are high in similarity, and therefore, high in error degree (note: "the events in and out of marriage" ( 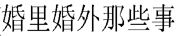 ) refers to a TV play).

For yet another example, the wrong search keyword is "wedding" ( 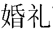 ), the search keyword for error-correction is "the events in and out of marriage" ( 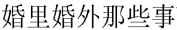 ), and the two search keywords are low in similarity, and therefore, low in error degree. Obviously, "wedding" ( 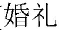 ) is also a vocabulary, which should not be recognized as the wrong search keyword, and "wedding" ( 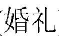 ) cannot form a key value pair with "the events in and out of marriage" ( 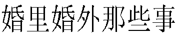 ).

Then, the error degree between the wrong search keyword and the corresponding search keyword for error-correction is inversely proportional to the retrieval ratio of the wrong search keyword and the corresponding search keyword for error-correction, that is, the higher the retrieval ratio, the lower the error degree.

For example, the wrong search keyword is "the ugliest in the world" ( 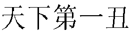 ), which is retrieved for 9000 times; the search keyword for error-correction is "the best knife in the world" ( 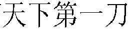 ), which is retrieved for 10000 times, and a retrieval ratio of the two search keywords reaches up to 0.9. In this case, it may be considered that an error degree between the wrong search keyword and the corresponding search keyword for error-correction is very low, and "the ugliest in the world" ( 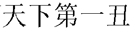 ) and "the best knife in the world" ( 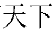 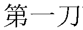 ) cannot form a key value pair. Actually, "the ugliest in the world" ( 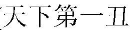 ) and "the best knife in the world" ( 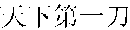 ) respectively refer to a name of a TV play and a name of a variety.

For further example, the wrong search keyword is "Dee renjie" ( 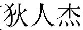 ), which is retrieved for 100 times; the search keyword for error-correction is "Judge Dee" ( 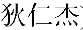 ), which is retrieved for 10000 times, and a retrieval ratio of the two search keywords is 0.01. In this case, it may be considered that an error degree between the wrong search keyword and the corresponding search keyword for error-correction is very high, and "Dee renjie" ( 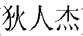 ) and "Judge Dee" ( 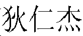 ) should form a key value pair.

Based on the above reasons, the error degree is directly proportional to the similarity, and is inversely proportional to the retrieval ratio. In particular, a formula may be set as follows: error degree=similarity k * (1-retrieval ratio), where the k represents a weight of the similarity, and if k=l, it is indicated that the similarity and the retrieval ratio are regarded as important together; if k>1, it is indicated that the similarity is regarded as relatively important; and if k<1, it is indicated that the retrieval ratio is regarded as relatively important.

A calculation formula of the error degree may also be set as follows: error degree=similarity k/retrieval ratio, and it is required to make the error degree directly proportional to the similarity and inversely proportional to the retrieval ratio.

If a search keyword for error-correction of one key value pair in key value pairs in each node is a wrong search keyword in another key value pair, it is indicated that the wrong search keyword in this key value pair is a search keyword to which no error-correction is actually required to perform. Therefore, a filter-processing module is further included in the present disclosure, and the filter-processing module is configured to filter key value pairs in which a search keyword for error-correction in all key value pairs is a wrong search keyword in another key value pair, and store filtered remaining key value pairs.

In particular, the error-correction operation module 14 of the present disclosure loads an error-correction file composed of key value pairs in a memory, constructs a hashmap, sets a main key as a wrong search keyword, and sets a value as a search keyword for error-correction; judges an input search keyword, directly performs error-correction on the input search keyword and regards a value corresponding to the main key as a search keyword subjected to error-correction if a main key identical to the input search keyword exists in the hashmap; and performs data searches according to the search keyword subjected to error-correction so as to obtain a corresponding search result.

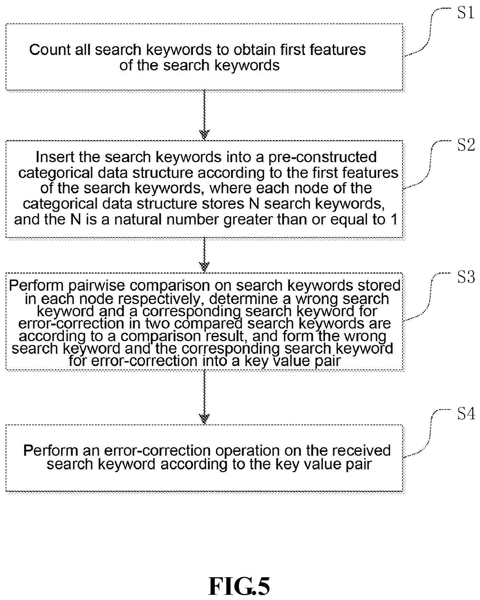

Corresponding to the device of the present disclosure, the present disclosure further provides a method for error-correction in data search. With reference to FIG. 5, the method includes the following.

In S1, all search keywords are counted to obtain first features of the search keywords;

In S2, the search keywords are inserted into a pre-constructed categorical data structure according to the first features of the search keywords, where each node of the categorical data structure stores N search keywords, and the N is a natural number greater than or equal to 1;

In S3, pairwise comparison is respectively performed on search keywords stored in each node, a wrong search keyword and a corresponding search keyword for error-correction in two compared search keywords are determined according to a comparison result, and the wrong search keyword and the corresponding search keyword for error-correction are formed into a key value pair; and

In S4, an error-correction operation is performed on the received search keyword according to the key value pair.

The present disclosure only need to perform pairwise comparison on search keywords stored by each node in the categorical data structure, without performing pairwise comparison on all search keywords, thereby greatly reducing calculating amount for performing error-correction on the search keywords, and increasing calculating efficiency.

Since keywords are generally input by a Pinyin input method or a five-stroke input method, randomness and lack of standard of input of search keywords are usually caused by the input method. To acquire whether the search keyword is a wrong search keyword or a search keyword for error-correction so as to perform error-correction better on search keywords, the search keywords are counted to obtain Pinyin or Chinese character strokes of the search keywords as first features of the search keywords.

In a particular implementation of the present disclosure, a categorical data pre-established by the present disclosure is a trie tree. After the trie tree is constructed, a search keyword table is established for each node of the trie tree, where size of the search keyword table is N (for instance, N=100), and the search keyword table can store N search keywords.

The step S1 further includes: obtaining a search history of the search keywords. In particular, the search history includes frequency of searching times and/or history of a search keyword serving as a wrong search keyword and a search keyword serving as a search keyword for error-correction in an original key value pair.

The step S2 includes: inserting the search keywords into the categorical data structure according to first features and the search history of the search keyword.

In a preferred embodiment of the present disclosure, the search keywords are sequenced according to its frequency of searching times, and then inserted into the trie tree in accordance with first features according to sequence of the search keywords. The more the number that the search keyword is queried, the higher the probability that the search keyword becomes the search keyword for error-correction. Moreover, size of the search keyword table established by each node of the trie tree is fixed as N, and the search keywords are inserted into the trie tree according to first features after being sequenced according to its frequency of searching times, so that it can be guaranteed that a search keyword with high frequency of searching times is firstly inserted, and a search keyword with low frequency of searching times is inserted later or cannot be inserted. Therefore, the trie tree established in this embodiment is higher in search efficiency, so that calculating amount for error-correction is reduced, and error-correction effect is improved.

Similarly, with reference to history of a search keyword serving as the wrong search keyword and a search keyword serving as the search keyword for error-correction in the original key value pair, the search keyword serving as the search keyword for error-correction in the original key value pair is firstly inserted into the trie tree, so that it is guaranteed that search efficiency of the established trie tree is higher, calculating amount for error-correction is reduced, and error-correction effect is improved.

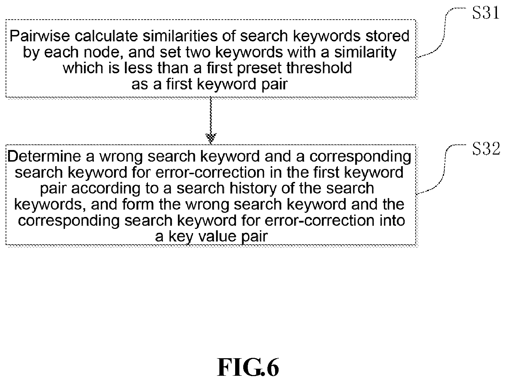

With reference to FIG. 6, the step S3 includes the following.

In S31, similarities of search keywords stored by each node are pairwise calculated, and two keywords with a similarity which is less than a first preset threshold are set as a first keyword pair;

In S32, a wrong search keyword and a corresponding search keyword for error-correction in the first keyword pair are determined according to a search history of the search keywords, and the wrong search keyword and the corresponding search keyword for error-correction are formed into a key value pair.

When a similarity of a first keyword pair obtained by the step S31 of the present disclosure is less than the first preset threshold, it is indicated that one search keyword in the two search keywords in the first keyword pair possibly is a wrong search keyword caused by randomness and lack of standard of input. Therefore, the step S32 determines, in conjunction with the search history, that which search keyword in the two search keywords in the first keyword pair is the wrong search keyword, and which search keyword is the search keyword for error-correction. The first preset threshold is set by those skilled in the art according to needs and experiences.

Further, the wrong search keyword and the corresponding search keyword for error-correction in the first keyword pair are determined according to the frequency of searching times and/or history of a search keyword serving as the wrong search keyword and a search keyword serving as the search keyword for error-correction in the original key value pair. For example, frequency of searching times of a search keyword with low frequency of searching times is compared with frequency of searching times of a search keyword with high frequency of searching times according to frequency of searching times of two search keywords in the first keyword pair, to obtain a retrieval ratio of the two numbers of searching times. When the retrieval ratio is less than a third preset threshold, the search keyword with low frequency of searching times is the wrong search keyword, and the search keyword with high frequency of searching times is the search keyword for error-correction. The third preset threshold is set by those skilled in the art according to needs and experiences. For another example, with reference to history of two search keywords, in which one of the search keywords serves as the wrong search keyword and the other one of the search keywords serves as the search keyword for error-correction in the original key value pair, in the first keyword pair, if one search keyword serves as the wrong search keyword in the original key value pair, it is determined that this search keyword serves as the wrong search keyword, and the other search keyword serves as the search keyword for error-correction.

In the present disclosure, an error degree (similarity) between the wrong search keyword and the corresponding search keyword for error-correction is still required to be calculated after determining the wrong search keyword and the corresponding search keyword for error-correction in the first keyword pair according to search history of the search keywords; and the wrong search keyword and the corresponding search keyword for error-correction are made to form a key value pair if the error degree is greater than a second preset threshold. The second preset threshold is set by those skilled in the art according to needs and experiences.

The method of the present disclosure further includes: filtering key value pairs in which a search keyword for error-correction in all key value pairs is a wrong search keyword in another key value pair, and storing filtered remaining key value pairs.

If a search keyword for error-correction of one key value pair in key value pairs in each node is a wrong search keyword in another key value pair, it is indicated that the wrong search keyword in this key value pair is a search keyword to which no error-correction is actually required to perform.

In particular, the step S4 of the present disclosure loads an error-correction file composed of key value pairs in a memory, constructs a hashmap, sets a main key as a wrong search keyword, and sets a value as a search keyword for error-correction; judges an input search keyword, directly performs error-correction on the input search keyword and regards a value corresponding to the main key as a search keyword subjected to error-correction if a main key identical to the input search keyword exists in the hashmap; and performs data searches according to the search keyword subjected to error-correction so as to obtain a corresponding search result.

The principle of the present disclosure will be further described below by way of a particular implementation.

Pinyin and frequency of searching times of all search keywords are counted, and a trie tree with 26 nodes is established. A size of a search keyword table of each node of the trie tree is 100, that is, each node can store 100 search keywords. All the search keywords are inserted into the trie tree according to Pinyin after being sequenced according to frequency of searching times.

Similarities of search keywords stored by each node are pairwise calculated, and two keywords with a similarity which is less than a first preset threshold are set as a first keyword pair.

Frequency of searching times of a search keyword with low frequency of searching times is compared with frequency of searching times of a search keyword with high frequency of searching times according to frequency of searching times of search keywords in the first keyword pair, to obtain a retrieval ratio of the two numbers of searching times. When the retrieval ratio is less than a third preset threshold, the search keyword with low frequency of searching times is the wrong search keyword, and the search keyword with high frequency of searching times is the search keyword for error-correction.

An error degree between the wrong search keyword and the corresponding search keyword for error-correction is calculated, and the wrong search keyword and the corresponding search keyword for error-correction are made to form a key value pair if the error degree is greater than a second preset threshold.

Key value pairs in which a search keyword for error-correction in all key value pairs is a wrong search keyword in another key value pair are filtered, and filtered remaining key value pairs are stored.

Therefore, the present disclosure only requires respectively perform pairwise comparison on 100 search keywords stored by each node in the 26 nodes to find out all wrong search keywords and corresponding search keywords for error-correction, so as to form key value pairs. There is no need as in the related art to generally perform pairwise comparison on 26*100 search keywords and calculate pairwise similarities of all the search keywords. The present disclosure reduces calculating amount of performing error-correction on the search keywords, and increases calculating efficiency.

The present disclosure loads an error-correction file composed of key value pairs in a memory, constructs a hashmap, sets a main key as a wrong search keyword, and sets a value as a search keyword for error-correction; judges an input search keyword, directly performs error-correction on the input search keyword and regards a value corresponding to the main key as a search keyword subjected to error-correction if a main key identical to the input search keyword exists in the hashmap; and performs data searches according to the search keyword subjected to error-correction so as to obtain a corresponding search result.

The method of the present disclosure is applied to device such as computer, mobile phone, tablet computer and the like; and a hardware device generally includes a CPU, an input-output module, a memory and other hardware modules. It is to be understood by those ordinarily skilled in the art that all or partial steps of implementing the above embodiments of the method may be completed by the CPU by means of program instruction-dependent hardware; the previously-described program may be stored in a computer readable storage medium, and when being executed, perform the steps of the above embodiments of the method; and the previously-described storage media include various media, such as ROM, RAM, magnetic disk or optical disc, capable of storing program codes.

Finally, it is to be noted that the above embodiments are merely illustrative ones of a technical solution of the present disclosure, but is not intended to limit it. Although the present disclosure has been described in detail by reference to the previously-described embodiments, those ordinarily skilled in the art shall appreciate that they may modify the technical solution stated by the previously-described embodiments, or perform equivalent substitutions on partial or all technical features; these modifications or substitutions do not make the spirit of the corresponding technical solution to depart from a scope of the technical solution of the embodiments of the present disclosure.

## Claims

1. A device for error-correction in data searches, comprising:
a keyword-counting module, which is configured to count all search keywords to obtain first features of the search keywords;
a keyword-inserting module, which is configured to insert the search keywords into a pre-constructed categorical data structure according to the first features of the search keywords, wherein each node of the categorical data structure stores N search keywords, and the N is a natural number greater than or equal to 1;
a key-value-corresponding module, which is configured to respectively perform pairwise comparison on search keywords stored in each node, determine a wrong search keyword and a corresponding search keyword for error-correction in two compared search keywords according to a comparison result, and form the wrong search keyword and the corresponding search keyword for error-correction into a key value pair; and
an error-correction operation module, which is configured to perform an error-correction operation on the received search keyword according to the key value pair.

2. The device according to claim 1, wherein the keyword-counting module is further configured to obtain a search history of the search keywords, wherein the search history comprises frequency of searching times and/or history of a search keyword serving as a wrong search keyword and a search keyword serving as a search keyword for error-correction in an original key value pair; and
the keyword-inserting module inserts the search keywords into the categorical data structure according to the first features and the search history of the search keywords.

3. The device according to claim 1 or 2, wherein the categorical data structure is a trie tree.

4. The device according to claim 3, wherein the key-value-corresponding module comprises:
a similarity-calculating submodule, which is configured to pairwise calculate similarities of search keywords stored by each node, and set two keywords with a similarity which is less than a first preset threshold as a first keyword pair; and
a key-value-determining submodule, which is configured to determine a wrong search keyword and a corresponding search keyword for error-correction in the first keyword pair according to a search history of the search keywords, and form the wrong search keyword and the corresponding search keyword for error-correction into a key value pair.

5. The device according to claim 4, wherein the key-value-determining submodule is further configured to calculate an error degree between the wrong search keyword and the corresponding search keyword for error-correction, and make the wrong search keyword and the corresponding search keyword for error-correction form a key value pair if the error degree is greater than a second preset threshold.

6. The device according to claim 1, further comprising a filter-processing module, which is configured to filter key value pairs in which a search keyword for error-correction in all key value pairs is a wrong search keyword in another key value pair, and store filtered remaining key value pairs.

7. A method for error-correction in data searches, comprising:
counting all search keywords to obtain first features of the search keywords;
inserting the search keywords into a pre-constructed categorical data structure according to the first features of the search keywords, wherein each node of the categorical data structure stores N search keywords, and the N is a natural number greater than or equal to 1;
performing pairwise comparison on search keywords stored in each node respectively, determining a wrong search keyword and a corresponding search keyword for error-correction in two compared search keywords according to a comparison result, and forming the wrong search keyword and the corresponding search keyword for error-correction into a key value pair; and
performing an error-correction operation on the received search keyword according to the key value pair.

8. The method according to claim 7, wherein the counting all search keywords to obtain first features of the search keywords further comprises: obtaining a search history of the search keywords, wherein the search history comprises frequency of searching times and/or history of a search keyword serving as a wrong search keyword and a search keyword serving as a search keyword for error-correction in an original key value pair; and
the inserting the search keywords in a pre-constructed categorical data structure according to the first features of the search keywords comprises: inserting the search keywords into the categorical data structure according to first features and the search history of the search keywords.

9. The method according to claim 7 or 8, wherein the categorical data structure is a trie tree.

10. The method according to claim 9, wherein the performing pairwise comparison on the search keywords stored in each node respectively, determining a wrong search keyword and a corresponding search keyword for error-correction in two compared search keywords according to a comparison result, and forming the wrong search keyword and the corresponding search keyword for error-correction into a key value pair comprises:
pairwise calculating similarities of search keywords stored by each node, and setting two keywords with a similarity which is less than a first preset threshold as a first keyword pair; and
determining a wrong search keyword and a corresponding search keyword for error-correction in the first keyword pair according to a search history of the search keywords, and forming the wrong search keyword and the corresponding search keyword for error-correction into a key value pair.

11. The method according to claim 10, wherein the determining a wrong search keyword and a corresponding search keyword for error-correction in the first keyword pair according to a search history of the search keywords, and forming the wrong search keyword and the corresponding search keyword for error-correction into a key value pair further comprises: calculating an error degree between the wrong search keyword and the corresponding search keyword for error-correction, and making the wrong search keyword and the corresponding search keyword for error-correction form a key value pair if the error degree is greater than a second preset threshold.

12. The method according to claim 7, further comprising: filtering key value pairs in which a search keyword for error-correction in all key value pairs is a wrong search keyword in another key value pair, and storing filtered remaining key value pairs.

13. An electronic device, comprising the device according to any of claims 1 to 6.
